# EUROPÄISCHE PATENTSCHRIFT

(11) **EP 2 622 956 B1**
(45) Veröffentlichungstag und Bekanntmachung des Hinweises auf die Patenterteilung: **28.06.2017**
(21) Anmeldenummer: 12001714.0
(22) Anmeldetag: 14.03.2012
(51) Int. Cl.: A01G 7/02

(54) **Begasung von Kulturpflanzen**
Gassing of cultivated plants
Gazage de plantes cultivées

(30) Priorität: 02.02.2012 DE 102012002042
(43) Veröffentlichungstag der Anmeldung: 07.08.2013
(73) Patentinhaber: Linde Aktiengesellschaft, 80331 München (DE)
(72) Erfinder: Henke, Silvia, 81475 München (DE)
(74) Vertreter: Gellner, Bernd

(56) Entgegenhaltungen:
- EP-A2- 1 226 862
- WO-A1-2010/074570
- WO-A2-02/060237
- WO-A2-2011/129638
- DE-B4-102006 054 504
- JP-A- 2001 320 967
- US-A- 5 747 042
- US-A1- 2004 112 120

## Beschreibung

Die vorliegende Erfindung betrifft ein Verfahren zur Begasung von Kulturpflanzen und ein Begasungssystem.

### Stand der Technik

Wenngleich die vorliegende Anmeldung hauptsächlich auf den Tomaten- und Paprikaanbau Bezug nimmt, ist die Erfindung nicht hierauf beschränkt, sondern bei einer Reihe von landwirtschaftlichen Kulturpflanzen einsetzbar, die auf eine entsprechende Begasung reagieren. Insbesondere betrifft dies den Gewächshausanbau.

Der Tomatenanbau wird in Mitteleuropa überwiegend in Gewächshäusern praktiziert. Die Tomate steht nach der Gurke gegenwärtig an zweiter Stelle beim Gewächshausgemüse. Die Anbauformen und -verfahren variieren stark. Sie reichen vom Anbau in unbeheizten Folientunneln bis hin zur Kultivierung in modernen, sogenannten Venlo-Gewächshäusern. Die Kultur erfolgt entweder in Erde oder in sogenanntem Substrat, in der Regel Steinwolle, Perlite oder Kokosfasern. Im Substratanbau kommen in der Regel geschlossene Verfahren zum Einsatz.

Auch im sogenannten "Ganzjahres"-Anbau von Tomaten in entsprechend beheizten Gewächshäusern ist in der Regel eine Anbaupause im Winter erforderlich. Diese reicht normalerweise zumindest von November bis Februar.

Auch außerhalb der genannten Anbaupause, insbesondere im Herbst, stößt der Tomatenanbau in Mittel- und Nordeuropa, in Nordamerika und in großen Teilen Asiens jedoch an seine Grenzen. Dies ist unter anderem auf die mangelnde Ausreifung der Tomaten an der Pflanze zurückzuführen. Die Früchte bleiben insbesondere im Herbst grün und müssen gegebenenfalls aufwendig nachgereift werden, was zusätzliche Lagerkapazität und/oder aufwendige Reifeanlagen erfordert.

Auch die gezielte Erzeugung reifer Früchte zu einem bestimmten Zeitpunkt ist häufig nur in unzureichendem Maße möglich.

Es besteht daher der Bedarf nach Verbesserungen im Kulturpflanzenbau, insbesondere im Tomaten- und Paprikaanbau.

Die US 5747042 offenbart ein Verfahren zur Begasung von Pflanzen mit Abgas, welches 500 bis 2000 ppm CO2 enthalten soll und dessen Ethengehalt möglichst niedrig gewählt wird.

### Offenbarung der Erfindung

Vor diesem Hintergrund schlägt die vorliegende Erfindung ein Verfahren zur Begasung von Kulturpflanzen, insbesondere von Tomatenpflanzen, und ein Begasungssystem mit den Merkmalen der unabhängigen Patentansprüche vor. Bevorzugte Ausgestaltungen sind jeweils Gegenstand der Unteransprüche sowie der nachfolgenden Beschreibung.

### Vorteile der Erfindung

Erfindungsgemäß wurde herausgefunden, dass für die Begasung von Kulturpflanzen, insbesondere Tomatenpflanzen, eine Gasatmosphäre besonders vorteilhaft ist, die Kohlendioxid in einem Volumenanteil von 300 bis 5.000 ppmv und Ethen in einem Volumenanteil von 5 bis 50 ppmv aufweist.

Die Angaben in ppmv ("Parts per Million by Volume") geben in fachüblicher Weise millionstel Anteile am Gesamtvolumen an. 1 ppmv entspricht 0,0001 Volumenprozent.

Wie beispielsweise in der DE 10 2006 054 504 B4 angegeben, werden Gewächshäuser im Herbst, Winter und Frühjahr in den eingangs genannten Klimazonen nur selten gelüftet. Energiesparende Gewächshäuser sind zudem sehr dicht und verfügen nur über einen geringen Luftaustausch mit der Umgebung. Aufgrund der Kohlendioxidaufnahme der Pflanzen sinkt deshalb die Kohlendioxidkonzentration im Gewächshaus am Tag aufgrund der Assimilationsleistung der Pflanzen oft auf niedrige Werte, was eine deutliche Verringerung der Photosyntheseleistung und damit des Ertrags zur Folge hat.

Durch einen Ausgleich dieser Kohlendioxidabreicherung durch künstlich zugeführtes Kohlendioxid kann dem begegnet werden. Auch ist bekannt, dass das in der natürlichen Umgebungsluft enthaltene Kohlendioxid mit einem Anteil von ca. 350 ppmv unterhalb des für das Pflanzenwachstum optimalen Anteils von etwa 800 bis 1.000 ppmv oder mehr liegt. Wird zusätzliches Kohlendioxid zur Verfügung gestellt, kann daher das Wachstum der Pflanzen gesteigert bzw. beschleunigt werden. Die Anreicherung der Gewächshausluft mit Kohlendioxid kann zu einer Produktionssteigerung von bis zu 40% beitragen. Die Angaben bezüglich der Optimumkonzentration von Kohlendioxid schwanken. Generell sind die Werte für Gemüsepflanzen höher als für Zierpflanzen.

Das Kohlendioxid wird zur Düngung in Gewächshäusern in der Regel über Schlauchsysteme oder mittels sogenannter Kohlendioxidkanonen verteilt. Das verwendete Kohlendioxid entstammt entweder Verbrennungsprozessen oder wird als sogenanntes technisches Kohlendioxid in mehr oder weniger reiner Form in Druckbehältern vorgehalten. Werden zur Kohlendioxiderzeugung (wie z.B. in den erwähnten Kohlendioxidkanonen) Verbrennungsprozesse genutzt, können diese gleichzeitig zur Erwärmung des Gewächshauses dienen. Üblicherweise kommen dabei Gasbrenner zum Einsatz, die meist mit Propan, Butan oder Erdgas betrieben werden.

Ethen bzw. Ethylen ist ein Phytohormon, das unter anderem zur Nachreifung von Bananen, Kiwis, Kakis und Zitrusfrüchten, zur Blüteninduktion bei Ananas sowie der Keimverhinderung bei Kartoffeln und Zwiebeln zum Einsatz kommt. Ethen ist ein hochentzündliches, farbloses Gas mit schwach süßlichem Geruch. Zur Nachreifung wird Ethen in der Regel als Gasmischung, z.B. mit 4 Vol.-% Ethen und 96 Vol.-% Stickstoff, eingesetzt und von der Anmelderin vertrieben.

Als Phytohormon beeinflusst Ethen das Keimwachstum, die Seneszenz, die Fruchtreifung, die Entwicklung von Blüten, den Blattfall, das Absterben von Pflanzenteilen und den Austrieb. Die Biosynthese erfolgt in höheren Pflanzen aus der Aminosäure Methionin. Neben Früchten können viele andere Pflanzenteile Ethen synthetisieren, wobei insbesondere Stressfaktoren eine induzierende Funktion zukommt. Die physiologischen Wirkungen von Ethen in Pflanzen sind vielfältig. Im vorliegenden Anwendungsgebiet ist insbesondere die Beschleunigung der Fruchtreife von Interesse. Bei sogenannten klimakterischen Früchten wie beispielsweise Äpfeln und Tomaten steigt der Ethenpegel nach dem Abschluss der Wachstumsphase steil an. Hierdurch werden spezifische Reifungsprozesse induziert, die beispielsweise den Chlorophyllabbau, die Steigerung der Atmung, die enzymatische Auflösung von Zellwänden, die Induktion der Bildung von Zuckern, von Aromastoffen und von Farbstoffen umfassen. Ethen induziert hierbei bestimmte Reifungsenzyme. Oft kommt es zu einer positiven Rückkopplung, wobei Ethen seine eigene Synthese fördert, was zu einer Beschleunigung und räumlichen Synchronisation der biochemischen Reifungsvorgänge in der Frucht führt.

Im Rahmen der vorliegenden Erfindung wurde erkannt, dass unerwarteterweise gerade eine Kombination von Ethen mit Kohlendioxid besondere Vorteile im Kulturpflanzenbau bietet. Diese Kombination bewirkt einerseits eine Steigerung des Pflanzenwachstums durch die Wirkung des Kohlendioxids, andererseits aber auch eine gute Ausreifung der Früchte. Damit kann während des gesamten Jahres eine "punktuelle" Begasung vorgenommen werden, um zu bestimmten Zeitpunkten das Wachstum der Pflanzen zu beschleunigen und gleichzeitig eine gezielte Reifung herbeizuführen. Hierdurch lassen sich Marktbedürfnisse zielgerichtet befriedigen und Preisvorteile nutzen.

Ethen hat dabei bei geeigneter Wahl der Volumenanteile keinen negativen Einfluss auf das Wachstum der grünen Pflanzenteile, sondern fördert die Ausreifung der Früchte an der Pflanze. Die grünen Pflanzenteile vermögen gleichzeitig aufgrund der erhöhten Konzentration an Kohlendioxid ihre Assimilationsleistung deutlich zu steigern, was insbesondere am Ende der Vegetationsperiode bei ggf. vorliegendem Lichtmangel von Bedeutung ist. Die Einlagerung und Umwandlung von Assimilationsprodukten in den Früchten wird dann wiederum durch die Wirkung des Ethens gefördert. Die jeweiligen Konzentrationen bzw. Anteile von Ethen und Kohlendioxid können durch geeignete Regelungstechnik gezielt eingestellt und jeweils genau auf die Bedürfnisse der jeweiligen Kulturpflanzen abgestimmt werden.

Die Erfindung bewirkt mit anderen Worten einen Synergieeffekt aus Wachstumsverbesserung einerseits und Reifungsförderung andererseits, wobei eine Ausreifung der Früchte an der intakten Pflanze sichergestellt ist. Die entsprechend durch Kohlendioxid in ihrem Wachstum geförderte Pflanze vermag ihrerseits noch positive Effekte in der Qualität der gebildeten Früchte zu induzieren, was mit einer konventionellen Nachreifung nach der Ernte nicht möglich ist.

Der Volumenanteil von Kohlendioxid liegt dabei beispielsweise bei mehr als 500, mehr als 1.000 oder mehr als 2.500 ppmv. Gleichzeitig kann ein Volumenanteil von weniger als 5.000, weniger als 2.500, weniger als 1000, oder weniger als 500 verwendet werden. Der Fachmann wird entsprechende Ober- und Untergrenzen dabei auf Grundlage entsprechender Versuche ermitteln und miteinander kombinieren.
Der Volumenanteil von Ethen liegt beispielsweise bei mehr als 5, mehr als 10, mehr als 20, mehr als 30 oder mehr als 40 ppmv. Gleichzeitig kann ein Volumenanteil von weniger als 50, weniger als 40, weniger als 30, weniger als 20 oder weniger als 10 ppmv verwendet werden. Der Fachmann wird auch hier entsprechende Ober- und Untergrenzen ermitteln und kombinieren.

In der Regel darf der Kohlendioxidgehalt in von Menschen betretenen Gewächshäusern eine maximal zulässige Arbeitsplatzkonzentration (MAK) von 5.000 ppmv nicht überschreiten. Die Verträglichkeitsgrenzen von Pflanzen bezüglich des Kohlendioxidgehalts sind höchst unterschiedlich, wobei bestimmte Arten bereits bei 600 ppmv Schäden zeigen, andere hingegen Konzentrationen von 10.000 bis 20.000 ppmv tolerieren. In entsprechenden Begasungsanlagen sind daher üblicherweise Einrichtungen vorhanden, die den Kohlendioxidgehalt der Atmosphäre messen und ggf. entsprechend einstellen. Eine vorteilhafte Kohlendioxidkonzentration liegt daher oberhalb der von atmosphärischer Luft, jedoch unter der maximal zulässigen Arbeitsplatzkonzentration und gewährleistet damit eine sichere Handhabung. Es ist ferner bekannt, dass die physiologischen Wirkungen von Ethen durch hohe Konzentrationen an Kohlendioxid (5.000 ppmv) in der Luft gehemmt werden, wobei es zu einer Blockierung der Ethenrezeptoren kommt. Daher sollte auch unter pflanzenphysiologischen Gesichtspunkten eine Konzentration von ca. 5.000 ppmv Kohlendioxid nicht überschritten werden.

Die zuvor angegebenen Konzentrationsbereiche für Ethen sind besonders vorteilhaft, weil hier noch kein signifikanter Blattfall und/oder Seneszenzphänomene induziert werden, insbesondere wenn eine gleichzeitige Kohlendioxidversorgung sichergestellt ist.

Das erfindungsgemäße Verfahren ermöglicht in besonders vorteilhafter Weise eine Ausreifung entsprechender Früchte, insbesondere Tomaten, an der Pflanze. Hierzu können bereits in entsprechenden Gewächshäusern vorhandene Anlagen zur Ausbringung von Kohlendioxid verwendet werden. In der Regel handelt es sich hierbei um Schlauchsysteme, über die Kohlendioxid aus den entsprechenden Quellen (Brennern oder Tanks) zu den Pflanzen geleitet und dort gezielt appliziert wird. Auf aufwendige Anlagen zur Nachreifung kann daher verzichtet werden. Das Verfahren bietet daher beträchtliche Kostenvorteile gegenüber dem Stand der Technik.

Mit besonderem Vorteil kann zur Erzeugung der Gasatmosphäre eine Gasmischung verwendet werden, die Ethen und Kohlendioxid in vorgemischter Form aufweist. Die vorgemischte Gasmischung kann in Druckbehältern zum Ausbringungsort verbracht werden, was die Verwendung signifikant erleichtert. Ethen ist, wie erwähnt, brennbar und darf daher nicht in zu großer Menge eingesetzt werden, wenn keine ausreichenden Explosionsschutzmaßnahmen möglich sind oder auf diese aus Kostengründen verzichtet werden soll. Gleichzeitig ergeben sich bei zu hohen Ethenkonzentrationen gegebenenfalls Schäden bei den begasten Pflanzen, z.B. ein vorzeitiger Blattfall. Da aber Gewächshäuser mit Kohlendioxid-Begasungsanlagen ohnehin über Mittel verfügen müssen, um den maximalen Kohlendioxidgehalt zu begrenzen, kann auf diese Mittel auch bei der Begrenzung des Ethengehalts zurückgegriffen werden. In vorgemischten Gasmischungen, die im Rahmen der Erfindung zum Einsatz kommen können, liegt der Ethengehalt in der Regel weitaus niedriger als der Kohlendioxidgehalt. Bei Erreichen eines maximal zulässigen Kohlendioxidgehalts liegt der Ethengehalt daher noch weit unterhalb kritischer Werte. Auf eine gesonderte Überwachung bezüglich Ethen - neben Kohlendioxid - kann daher verzichtet werden. Auch dies ermöglicht eine einfache und kostengünstige Weiterverwendung bestehender Anlagen.

Alternativ dazu kann eine Gasmischung auch vor Ort aus den entsprechenden Reingasen erzeugt werden. Von dem Begriff "Reingas" seien dabei auch Gase mit Restgehalten an Verunreinigungen und/oder Fremdgasen umfasst. Eine Mischung vor Ort ermöglicht es, die Gehalte der Einzelgase an der Gasatmosphäre an die jeweilige Aufgabe anzupassen, beispielsweise für unterschiedliche Kulturpflanzen oder zu unterschiedlichen Zeiten unterschiedliche Kohlendioxid- und Ethengehalte zu verwenden.

Vorteilhaft kann auch sein, das Kohlendioxid in der Gasatmosphäre mittels einer Verbrennungsreaktion bereitzustellen. Dies ermöglicht es, bisher verwendete Kohlendioxidanlagen, beispielsweise die erwähnten Kohlendioxidkanonen oder -brenner, weiter zu verwenden. Diese können dann weiter zur Beheizung herangezogen werden. In diesem Fall wird zusätzlich zu dem aus der Verbrennung stammenden Kohlendioxid Ethen zudosiert. Das Ethen seinerseits kann beispielsweise unter Verwendung von Druckgasflaschen zur Verfügung gestellt werden. Andererseits kann bei Verwendung sogenannten "technischen" Kohlendioxids in Druckgasbehältern eine Beheizung auch in anderer Weise erfolgen, die für eine Kohlendioxidproduktion nicht geeignet ist, beispielsweise durch die Verbrennung von Biomasse.

Besondere Vorteile entfaltet das erfindungsgemäße Verfahren bei Tomatenpflanzen. Vorteilhaft kann auch sein, Paprikapflanzen der erläuterten Gasatmosphäre auszusetzen. Sowohl Tomaten- als auch Paprikapflanzen profitieren in besonderer Weise von den erfindungsgemäßen Verfahren, weil durch dieses eine sichere oder induzierte Ausreifung der entsprechenden Früchte während des gesamten Vegetationszeitraums sichergestellt werden kann. Eine Begasung mit Ethen (ohne Kohlendioxid) ermöglicht eine abschließende Ausreifung und damit eine Ausdehnung des Kulturzeitraums auch auf den Spätherbst.

Vorteilhaft ist dabei, die Kulturpflanzen der Gasatmosphäre über einen Zeitraum von wenigstens drei Tagen auszusetzen. Vorteilhafterweise erfolgt der Einsatz der Gasatmosphäre über den gesamten Ausreifezeitraum der entsprechenden Früchte, bei Tomaten beispielsweise über sieben Tage.

Die Kulturpflanzen können dabei der Gasatmosphäre auch kontinuierlich oder intermittierend ausgesetzt werden. Eine Erhöhung des Kohlendioxidgehalts an der Gasatmosphäre kann dabei z.B. nur tagsüber erfolgen, weil nachts keine Assimilationsleistung erbracht und damit kein Kohlendioxid benötigt wird. Hierbei kann auch die Eigenstimulation der Ethensynthese in den Pflanzen ausgenutzt werden, indem nur intermittierend ein Ethenstimulus gegeben wird. Durch entsprechende Überwachungseinrichtungen kann stets eine ausreichende Konzentration der Gase sichergestellt werden.

Wie zuvor angegeben, müssen für eine sichere Handhabung der Kohlendioxiddüngung die sich ergebenden Konzentrationen an Kohlendioxid im Gewächshaus überwacht und sicher eingehalten werden. Ist Ethen einer entsprechenden Gasmischung beigemischt, korreliert sein Gehalt in der Gasatmosphäre mit der ausgebrachten Kohlendioxidmenge. Der erwünschte Gehalt an Ethen kann auch vor Ort mit entsprechender Steuerungstechnik und Sensorik realisiert werden (durch Verdünnung mit Raumluft).

Von Vorteil wird zur Erzeugung der Gasatmosphäre eine Gasmischung verwendet, die zumindest Ethen, Kohlendioxid und Stickstoff aufweist oder aus Ethen, Kohlendioxid und Stickstoff besteht. Es wird beispielsweise eine solche Gasmischung, die aus Stickstoff, Kohlendioxid und Ethen besteht, in ein Gewächshaus oder einen Folientunnel eingeleitet, um darin die gewünschte Kohlendioxid und Ethen enthaltende Atmosphäre zu erzeugen.

Die Erfindung erstreckt sich auch auf die Verwendung einer entsprechenden Gasmischung, insbesondere zur Begasung von Kulturpflanzen, wie zuvor erläutert. Ein erfindungsgemäß ebenfalls vorgesehenes Begasungssystem profitiert in gleicher Weise von den zuvor erläuterten Vorteilen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnung ausführlich beschrieben.

### Figurenbeschreibung

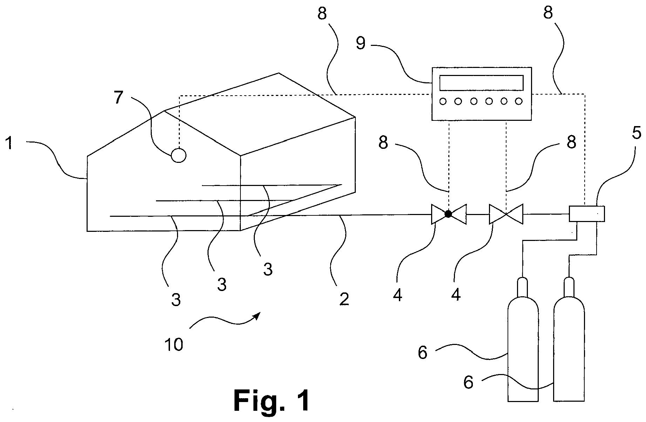

- Figur 1: zeigt ein Begasungssystem gemäß einer besonders bevorzugten Ausführungsform der Erfindung in schematischer Darstellung.

In Figur 1 ist ein Begasungssystem 10 gemäß einer besonders bevorzugten Ausführungsform der Erfindung dargestellt.

Ein Gewächshaus 1 ist mit einer über eine Zuleitung 2 gespeisten Gasverteilanlage 3 versehen, die beispielsweise in entsprechenden Pflanzreihen angeordnete Schläuche umfasst. Die Gasverteilanlage 3 erlaubt eine zielgerichtete, dosierte Ausbringung entsprechender Gase ohne große Verluste.

Die Zuleitung 2 wird mittels Ventilen 4 und beispielsweise unter Verwendung einer Mischanordnung 5 versorgt. Eine entsprechende Mischanordnung 5 ist beispielsweise dann vorgesehen, wenn eine Gasmischung zur Begasung vor Ort vorgemischt wird. Hierzu sind an die Mischanordnung 5 Gasbehälter 6 angeschlossen, beispielsweise Ethen- und Kohlendioxid-Druckgasflaschen. Es versteht sich, dass, wenn eine entsprechende Gasmischung vorgemischt bereitgestellt wird, auch auf die Mischanordnung 5 verzichtet werden kann.

Durch eine Einspeisung einer Gasmischung über die Gasverteilanlage 3 in das Gewächshaus 1 bildet sich dort eine Gasatmosphäre aus. Diese kann mittels einer Überwachungseinrichtung 7, die beispielsweise über Kohlendioxid- und/oder Ethensensoren verfügt, überwacht werden. Entsprechende Messwerte werden einer Steuereinheit 9 zugeleitet. Die Steuereinheit 9 verfügt über ein Netz an Mess- und Ansteuerleitungen 8, die auch als entsprechende Funkverbindungen ausgebildet sein können, und überwacht mittels dieser die sich in dem Gewächshaus 1 bildende Gasatmosphäre. Auf dieser Grundlage steuert die Steuereinheit 9 die Ventile 4 und/oder die Mischanordnung 5 und damit die Einspeisung der entsprechenden Gase.

Die Steuereinheit 9 kann über Benutzereingabemöglichkeiten verfügen, mittels derer der Benutzer Kenngrößen, z.B. eine Gewächshausgröße- und/oder Fläche, den Besatz mit Pflanzen, das jeweilige Wachstumsstadium, die Sorte und dergleichen eingeben kann, um eine optimale Gasversorgung sicherzustellen. Die Steuereinheit 9 weist vorteilhafterweise auch Sicherheitseinrichtungen (z.B. eine Verbindung zu einem optischen und/oder akustischen Alarmgeber, der eine zu niedrige Sauerstoff- bzw. eine zu hohe Kohlendioxidkonzentration signalisiert) auf. Derartige Sicherheitseinrichtungen sind vorzugsweise vor den Zugängen zu dem Gewächshaus angebracht. Ein Zusätzlicher Sauerstoffsensor kann je nach den räumlichen Gegebenheiten auf Grundlage einer Gefährdungsbeurteilung vorgesehen sein.

Im Rahmen eines Anbauversuchs wurden 9 Sorten Cocktailtomaten und 11 Sorten Rispentomaten in 200-m²-Gewächshäusern über 24 Stunden mit einer Mischung aus 4% Ethen und 96% Stickstoff begast. Die Ethenkonzentration wurde auf einen Wert von 5 oder 10 ppmv eingestellt. Die Versuchsauswertung erfolgte mittels Fotobonitur.

Bei der Mehrzahl der untersuchten Sorten ergab sich eine nahezu vollständige Ausreifung zuvor grüner Früchte innerhalb von sieben Tagen.

### Bezugszeichenliste

- 10: Begasungssystem

- 1: Gewächshaus
- 2: Zuleitung
- 3: Gasverteilanlage
- 4: Ventil
- 5: Mischeinrichtung
- 6: Gasbehälter
- 7: Überwachungseinrichtung
- 8: Leitung
- 9: Steuereinrichtung

## Patentansprüche

1. Verfahren zur Begasung von Kulturpflanzen, das umfasst, die Kulturpflanzen einer Gasatmosphäre auszusetzen, die Kohlendioxid in einem Volumenanteil von 300 bis 5.000 ppmv und Ethen in einem Volumenanteil von mehr als 5 ppmv und weniger als 50 ppmv aufweist.

2. Verfahren nach Anspruch 1, bei dem die Kulturpflanzen der Gasatmosphäre in einem Gewächshaus (1) ausgesetzt werden, in das Ethen und/oder Kohlendioxid, insbesondere mittels einer Gasverteilanlage (3) und/oder unter Verwendung von Stickstoff, eingeleitet wird.

3. Verfahren nach einem der vorstehenden Ansprüche, bei dem zur Erzeugung der Gasatmosphäre eine Gasmischung verwendet wird, die zumindest Ethen, Kohlendioxid und/oder Stickstoff aufweist.

4. Verfahren nach einem der vorstehenden Ansprüche, bei dem die Bereitstellung des Kohlendioxids in der Gasatmosphäre durch eine Verbrennung erfolgt.

5. Verfahren nach einem der vorstehenden Ansprüche, bei dem Tomaten- und/oder Paprikapflanzen mit unreifen Früchten der Gasatmosphäre ausgesetzt werden.

6. Verfahren nach einem der vorstehenden Ansprüche, bei dem die Kulturpflanzen der Gasatmosphäre über wenigstens drei oder sieben Tage kontinuierlich oder intermittierend ausgesetzt werden.

7. Begasungssystem (10) zur Begasung von Kulturpflanzen, das Mittel aufweist, die dafür eingerichtet sind, die Kulturpflanzen einer Gasatmosphäre auszusetzen, die Kohlendioxid in einem Volumenanteil von 300 bis 5.000 ppmv und Ethen in einem Volumenanteil von mehr als 5 ppmv und weniger als 50 ppmv aufweist.

## Claims

1. Process for supplying gas to crop plants, which comprises exposing the crop plants to a gas atmosphere which includes carbon dioxide in a volume fraction of 300 to 5000 ppmv and ethene in a volume fraction of more than 5 ppmv and less than 50 ppmv.

2. Process according to Claim 1, in which the crop plants are exposed to the gas atmosphere in a greenhouse (1) into which ethene and/or carbon dioxide is passed, in particular by means of a gas distribution system (3) and/or using nitrogen.

3. Process according to one of the preceding claims, in which a gas mixture which includes at least ethene, carbon dioxide and/or nitrogen is used for generating the gas atmosphere.

4. Process according to one of the preceding claims, in which the carbon dioxide in the gas atmosphere is provided by a combustion.

5. Process according to one of the preceding claims, in which tomato and/or bell pepper plants with immature fruits are exposed to the gas atmosphere.

6. Process according to one of the preceding claims, in which the crop plants are exposed continuously or batchwise to the gas atmosphere over at least three or seven days.

7. Gas supply system (10) for supplying gas to crop plants, which includes means designed for exposing the crop plants to a gas atmosphere which includes carbon dioxide in a volume fraction of 300 to 5000 ppmv and ethene in a volume fraction of more than 5 ppmv and less than 50 ppmv.

## Revendications

1. Procédé de gazage de plantes cultivées, qui comprend l'exposition des plantes cultivées à une atmosphère gazeuse qui comprend du dioxyde de carbone en une proportion volumique de 300 à 5 000 ppm en volume et de l'éthène en une proportion volumique de plus de 5 ppm en volume et de moins de 50 ppm en volume.

2. Procédé selon la revendication 1, dans lequel les plantes cultivées sont exposées à l'atmosphère gazeuse dans une serre (1) dans laquelle de l'éthène et/ou du dioxyde de carbone sont introduits, notamment au moyen d'une unité de distribution de gaz (3) et/ou en utilisant de l'azote.

3. Procédé selon l'une quelconque des revendications précédentes, dans lequel un mélange gazeux qui comprend au moins de l'éthène, du dioxyde de carbone et/ou de l'azote est utilisé pour la génération de l'atmosphère gazeuse.

4. Procédé selon l'une quelconque des revendications précédentes, dans lequel la mise à disposition du dioxyde de carbone dans l'atmosphère gazeuse a lieu par une combustion.

5. Procédé selon l'une quelconque des revendications précédentes, dans lequel des plantes de tomates et/ou de poivrons comprenant des fruits non mûrs sont exposées à l'atmosphère gazeuse.

6. Procédé selon l'une quelconque des revendications précédentes, dans lequel les plantes cultivées sont exposées à l'atmosphère gazeuse de manière continue ou intermittente pendant au moins trois ou sept jours.

7. Système de gazage (10) pour le gazage de plantes cultivées, qui comprend des moyens conçus pour exposer les plantes cultivées à une atmosphère gazeuse qui qui comprend du dioxyde de carbone en une proportion volumique de 300 à 5 000 ppm en volume et de l'éthène en une proportion volumique de plus de 5 ppm en volume et de moins de 50 ppm en volume.
